# EUROPEAN PATENT APPLICATION

(11) **EP 2 955 016 A1**
(43) Date of publication of application: **16.12.2015**
(21) Application number: 15171054.8
(22) Date of filing: 08.06.2015
(51) Int. Cl.: B32B 7/12, B32B 29/00, B32B 29/08, B31F 1/07, B32B 3/30, D21H 27/00

(54) **IMPROVED MULTILAYER SHEET**

(30) Priority: 09.06.2014 IT MI20141049
(71) Applicant: Gambini International S.A., 2449 Luxembourg (LU)
(72) Inventor: Gambini, Giovanni, 56100 PISA (IT)
(74) Representative: Martini, Gabriele

(57) **Abstract**

Multilayer sheet (10) of the type comprising a first layer (11) and a second layer (12) superimposed and constrained to each other through adhesive material (17) interposed between them in small amounts, wherein both said layers (11, 12) are embossed;
characterised in that:
- said first layer (11) comprises a first (13) embossing matrix so as to make a plurality of first projections having a preset depth (d), and a second embossing matrix (15) so as to make a plurality of second projections having a greater depth (D) of said preset depth (d) of said first (13) embossing matrix;
- said second layer (12) comprises a first (14) embossing matrix so as to make a plurality of first projections having a preset depth (d'), and a second (16) embossing matrix so as to make a plurality of second projections having a greater depth (D') than said preset depth (d') of said first (14) embossing matrix;
- said adhesive material (17) being arranged at the contact points between said second (15) embossing matrix of said first layer (11) and said second layer (12).

## Description

The present invention refers to a multilayer sheet usable as toilet paper and/or paper for household use. The present invention refers, in particular, to a multilayer sheet having two layers joined together through adhesive material so as to form a multilayer toilet paper.

Currently a strong need is felt for toilet paper and/or kitchen absorbent paper that are more and more soft and simultaneously provided with a moderate mechanical resistance.

In addition, it is currently known that the absorbent capacity depends on the volume available between the layers; as a matter of fact, the greater the free internal volume, the greater the amount of water that can be held therein.

This need is currently fulfilled by engraving embossing patterns on the layers that allow on one hand the layers to be safely constrained to one another, leaving free volume between the contact points.

The term embossing is used to indicate the production, starting from a smooth surface condition, of a plurality of local "recesses". As known, such embossing is made by making the single layers pass in contact with rollers bearing on their surfaces projections corresponding to the recesses to be made.

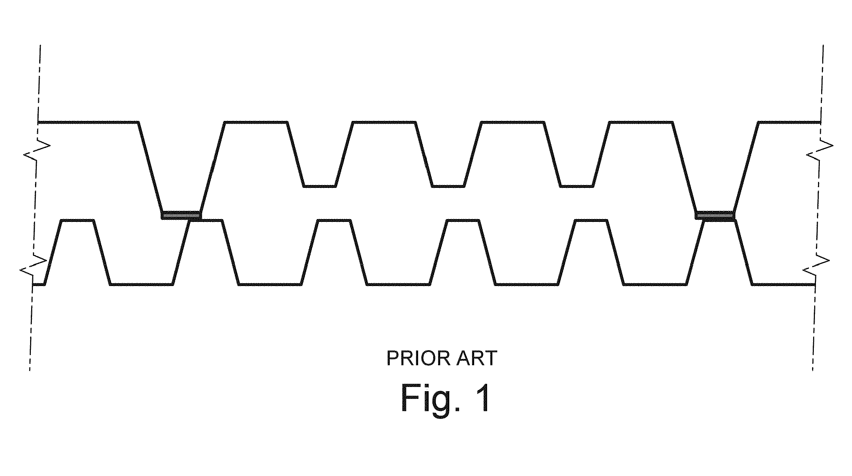

In order to increase the water collection volume between the layers it is currently known to make a multilayer sheet as shown in figure 1 where the layer has two embossing patterns having different depths.

Thus, making the contact points, provided with glue, at the embossing having greater depth, between two contact points a large collection volume is made.

However, such a solution has the drawback of producing sheet having a low sheet thickness and a different aesthetic quality between the internal side and the outer one.

Starting from such known art, the purpose of the present invention is to provide a multilayer sheet that is an alternative to the known ones and particularly efficient in terms of absorbent capacity, having high thickness and a decoration on both sides and a good aesthetic quality.

Further characteristics of the invention are outlined by the dependent claims.

The characteristics and advantages of a multilayer sheet according to the present invention will be more apparent from the following exemplifying and nonlimiting description with reference to the attached schematic drawings, wherein:
- figure 1 shows a multilayer sheet according to the known art; and
- figures 2 and 3 show two examples of multilayer sheets according to the present invention.

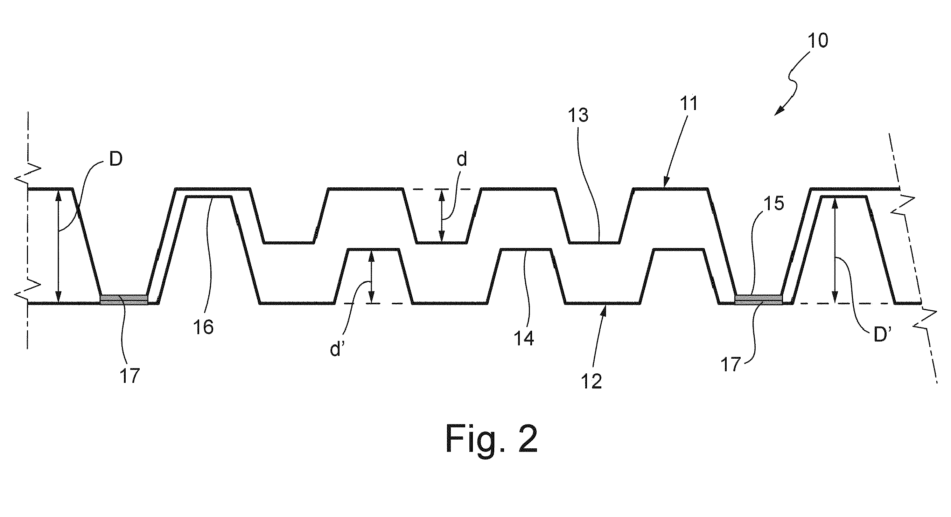

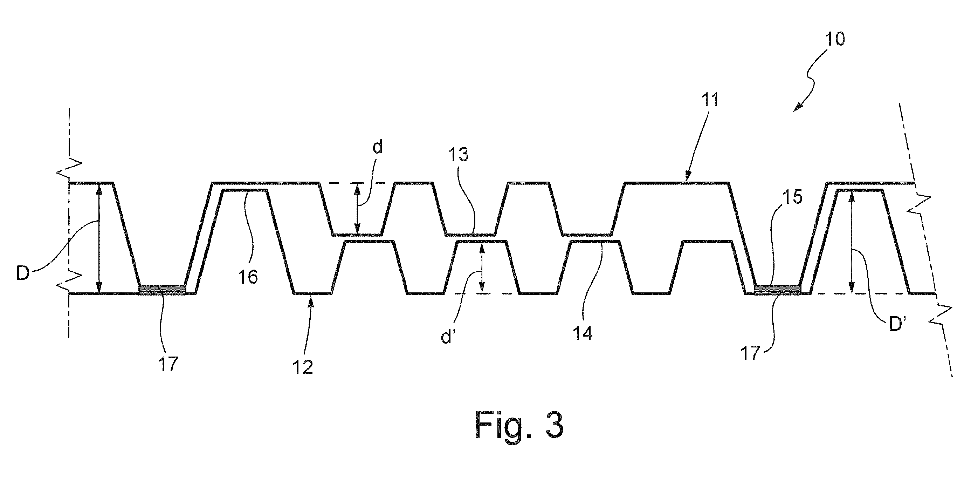

With reference to figures 2 and 3, reference number 10 shows a multilayer sheet according to the present invention.

Such multilayer sheet 10 is of the type comprising a first layer 11 and a second layer 12 superimposed and constrained to each other through adhesive material 17 interposed between the same in small amounts.

As observable, both layers 11, 12 are embossed. Specifically:
- the first layer 11 comprises a first 13 embossing matrix so as to make a plurality of first projections having a preset depth d, and a second 15 embossing matrix so as to make a plurality of second projections having a greater depth D than the preset depth d of the first 13 embossing matrix;
- the second layer 12 comprises a first 14 embossing matrix so as to make a plurality of first projections having a preset depth d', and a second 16 embossing matrix so as to make a plurality of second projections having depth D' greater than the preset depth d' of the first 14 embossing matrix;
- the adhesive material 17 being arranged at the contact points between the second 15 embossing matrix of the first layer 11 and the second layer 12. Preferably, the preset depth d of the first 13 embossing matrix of the first layer 11 is substantially half of the depth D of the second embossing matrix 15 of the first layer 11.

Even more preferably, the preset depth d of the first 13 embossing matrix of the first layer 11 is substantially equal to the preset depth d' of the first 14 embossing matrix of the second layer 12.

In the shown embodiment, the depth D of the second 15 embossing matrix of the first layer 11 is substantially equal to the depth D' of the second 16 embossing matrix of the second layer 12.

According to the invention, the contact points between the layers 11, 12 provided with adhesive material 17 are made by coupling the second 15 embossing matrix of the first layer 11 with the non-embossed surface portion of the second layer 12.

According to an embodiment, between two adjacent contact points, both the first layer 11 and the second layer 12 comprise a plurality of embossing points of the first 13, 14 embossing matrix.

In such a case, the first layer 11 and the second layer 12 may comprise the same number of embossing points of the first 13, 14 embossing matrix.

Thus, still in this case, the first 13 embossing matrix of the first layer 11 may be substantially superimposed in phase with the first 14 embossing matrix of the second layer 12, as observable in figure 2. Alternatively, between two adjacent contact points the first layer 11 and the second layer 12 may comprise a different number of embossing points of the first 13, 14 embossing matrix.

In such a case, figure 3, the first 13 embossing matrix of the first layer 11 is substantially staggered with respect to the first 14 embossing matrix of the second layer 12.

It has thus been observed that a multilayer sheet according to the present invention attains the previously outlined purposes.

The multilayer sheet of the present invention thus conceived is susceptible to several modifications and variants, all falling within the same inventive concept; in addition, all details can be replaced by technically equivalent elements. In practice, the materials used, as well as their dimensions, may be of any type according to the technical requirements.

## Claims

1. Multilayer sheet (10) of the type comprising a first layer (11) and a second layer (12) superimposed and constrained to each other through adhesive material (17) interposed between the same in small amounts, wherein both said layers (11, 12) are embossed; **characterised in that**:
- said first layer (11) comprises a first (13) embossing matrix so as to make a plurality of first projections having a preset depth (d), and a second embossing matrix (15) so as to make a plurality of second projections having a greater depth (D) than said preset depth (d) of said first (13) embossing matrix;
- said second layer (12) comprises a first (14) embossing matrix so as to make a plurality of first projections having a preset depth (d'), and a second (16) embossing matrix so as to make a plurality of second projections having a depth (D') greater than said preset depth (d') of said first (14) embossing matrix;
- said adhesive material (17) being arranged at the contact points between said second (15) embossing matrix of said first layer (11) and said second layer (12).

2. Multilayer sheet (10) according to claim 1 **characterised in that** said preset depth (d) of said first (13) embossing matrix of said first layer (11) is substantially half of said depth (D) of said second embossing matrix (15) of said first layer (11).

3. Multilayer sheet (10) according to claim 2 **characterised in that** said preset depth (d) of said first (13) embossing matrix of said first layer (11) is substantially equal to said preset depth (d') of said first (14) embossing matrix of said second layer (12).

4. Multilayer sheet (10) according to claim 3 **characterised in that** said depth (D) of said second (15) embossing matrix of said first layer (11) is substantially equal to said depth (D') of said second (16) embossing matrix of said second layer (12).

5. Multilayer sheet (10) according to any of the preceding claims **characterised in that** the contact point provided with said adhesive material (17) between said layers (11, 12) is made by coupling said second (15) embossing matrix of said first layer (11) with the non-embossed surface portion of said second layer (12).

6. Multilayer sheet (10) according to claim 5 **characterised in that** between two adjacent contact points both said first layer (11) and said second layer (12) comprise a plurality of embossing points of said first (13, 14) embossing matrix.

7. Multilayer sheet (10) according to claim 6 **characterised in that** between two adjacent contact points both said first layer (11) and said second layer (12) comprise the same number of embossing points of said first (13, 14) embossing matrix.

8. Multilayer sheet (10) according to claim 7 **characterised in that** said first (13) embossing matrix of said first layer (11) is substantially superimposed in phase with said first (14) embossing matrix of said second layer (12).

9. Multilayer sheet (10) according to claim 6 **characterised in that** between two adjacent contact points said first layer (11) and said second layer (12) comprise a different number of embossing points of said first (13, 14) embossing matrix.

10. Multilayer sheet (10) according to claim 9 **characterised in that** said first (13) embossing matrix of said first layer (11) is substantially staggered with respect to said first (14) embossing matrix of said second layer (12).
